# FASCICULE DE BREVET EUROPEEN

(11) **EP 1 841 169 B1**
(45) Date de publication et mention de la délivrance du brevet: **11.03.2009**
(21) Numéro de dépôt: 06300286.9
(22) Date de dépôt: 27.03.2006
(51) Int. Cl.: H04L 29/06, H04M 3/42

(54) **Système de communication avec controle à distance d'un moyen de transmission sans fil**
Kommunikationssystem mit Fernsteuerung einer drahtlosen Übertragung
Communication system with remote controlling of a wireless transmission means

(43) Date de publication de la demande: 03.10.2007
(73) Titulaire: Alcatel Lucent, 75008 Paris (FR)
(72) Inventeur: Jeannerod, Laurent, 67205, OBERHAUSBERGEN (FR)
(74) Mandataire: Sciaux, Edmond

(56) Documents cités:
- EP-A- 1 278 391
- WO-A-01/69898
- US-A- 6 081 533

## Description

La présente invention concerne un système de communication téléphonique comprenant un central et au moins un poste fixe muni d'un moyen de transmission sans fil lui permettant de communiquer avec au moins un équipement mobile. L'invention concerne plus particulièrement un moyen de contrôler à distance le moyen de transmission sans fil depuis le central.

Le document US 6.081.533 décrit un système connu permettant de disposer d'une interface d'application sur un modem pour câble de distribution TV ou sur un modem ADSL, afin d'augmenter le nombre d'applications de ces modems.

Le document EP 1.278.391 décrit un système connu comportant un poste central permettant de télécommander des appareils électroménagers via Internet ou un réseau téléphonique.

Le document WO 01/69898 décrit un système connu de téléphonie de type DECT dans lequel chaque terminal téléphonique mobile peut être posé sur un socle chargeur qui est relié à un autocommutateur d'entreprise. Un adaptateur intégré au socle permet de fournir des fonctions supplémentaires à ce terminal, pendant qu'il est posé sur son socle.

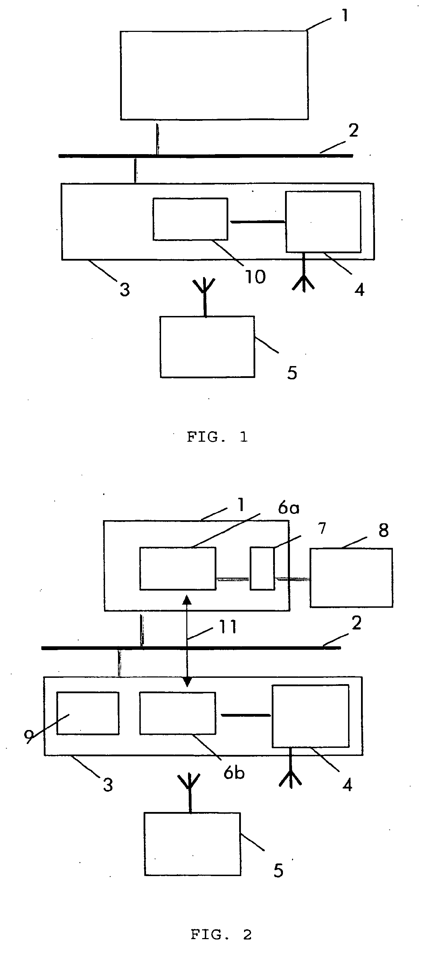

Il est connu, dans le domaine des systèmes de communication téléphoniques, des systèmes semblables à celui illustré à la figure 1. Ce système comprend un central 1. Un réseau 2 connecte le central 1 avec au moins un poste fixe 3. Chaque poste fixe 3 est un combiné téléphonique fonctionnant en mode IP ou en mode TDM et offre à un utilisateur des services téléphoniques. Ces services sont contrôlés au moyen d'une application logicielle locale s'exécutant sur le poste fixe 3 pouvant collaborer le cas échéant avec une application logicielle centrale s'exécutant sur le central 1. Le poste fixe 3 peut comprendre un moyen de transmission sans fil 4 permettant de communiquer avec au moins un équipement mobile 5. Cet équipement mobile 5 peut être un poste mobile de téléphonie, un ordinateur personnel fixe ou portable, un assistant personnel (PDA), un baladeur, un casque audio, un microphone, une oreillette, un système d'audioconférence ou tout autre dispositif mobile. Une application de transmission locale 10 mettant en oeuvre le moyen de transmission sans fil 4 est classiquement intégrée dans l'application logicielle locale du poste fixe 3. Une telle application de transmission 10 est directement sous le contrôle de l'application logicielle locale du poste fixe 3 et est placée au plus près du moyen de transmission 4 afin de spécifiquement contrôler la fonction transmission. L'application logicielle locale du poste fixe 3 assure la synchronisation entre les opérations de téléphonie, d'interface homme machine et les services de transmission sans fil.

Une telle organisation manque de flexibilité. Il est pratiquement impossible de modifier l'application de transmission locale 10 ou de proposer une adaptation par une tierce partie. La seule solution consiste à développer complètement une nouvelle application logicielle locale incluant de nouveaux services. Ceci limite les possibilités d'intervention d'une tierce partie.

Au regard des aspects sécurité, l'application de transmission locale 10 présente le même niveau de sécurité que l'application logicielle locale.

De plus, en cas d'évolution, il est nécessaire de déployer la nouvelle version de l'application de transmission locale 10 dans chacun des postes fixes 3 du système.

La présente invention remédie à ces différents inconvénients.

L'invention ajoute au système précédent un premier agent logiciel offrant une interface de programmation à une application de transmission déportée, un second agent logiciel localisé dans le poste fixe et interfacé avec ledit moyen de transmission sans fil, les deux agents logiciels communiquant entre eux au moyen du réseau de telle manière à permettre à l'application de transmission déportée de contrôler à distance le moyen de transmission sans fil.

L'invention permet ainsi avantageusement d'offrir une interface de programmation qui facilite l'accès de tierces parties.

Selon une autre caractéristique de l'invention, le premier agent logiciel est localisé dans le central et l'application de transmission déportée s'exécute sur le central.

Ceci localise avantageusement l'application de transmission déportée au niveau du central du système de communication. L'application de transmission déportée est ainsi avantageusement unique.

Selon une autre caractéristique de l'invention, les deux agents logiciels communiquent entre eux au moyen d'un tunnel de communication sécurisé.

Il est ainsi avantageusement possible de déterminer un niveau de sécurité propre aux deux agents indépendamment du niveau de sécurité de l'application logicielle locale du poste fixe.

D'autres caractéristiques, détails et avantages ressortiront plus clairement de la description détaillée de l'invention donnée ci-après à titre indicatif en relation avec des dessins sur lesquels :
- la figure 1 illustre un exemple de système de communication selon l'art antérieur,
- la figure 2 illustre un exemple de système de communication selon l'invention,
- la figure 3 illustre le fonctionnement d'une application de DECOUVERTE pouvant être mise en oeuvre grâce à l'invention,
- la figure 4 illustre le fonctionnement d'une application de NUMEROTATION pouvant être mise en oeuvre grâce à l'invention.

La figure 1 a été détaillée précédemment lors de la description de l'art antérieur.

La figure 2 montre un système de communication dans une configuration identique à celle de la figure 1 modifiée conformément à l'invention. Sur cette figure 2 se retrouvent les différents composants déjà présents sur la figure 1 représenté avec les mêmes numéros de référence. Ce qui a été décrit s'applique mutatis mutandis à l'invention à l'exception des différences suivantes. L'application de transmission locale 10 disparaît. Le système de communication selon l'invention comprend un premier agent logiciel 6a offrant une interface de programmation 7 (API) à au moins une application de transmission déportée 8 et un second agent logiciel 6b localisé dans le poste fixe 3 et interfacé avec le moyen de transmission sans fil 4. Les deux agents logiciels 6a, 6b communiquent entre eux au moyen du réseau 2 de manière à permettre à l'application de transmission déportée 8 de contrôler à distance le moyen de transmission sans fil 4.

Ainsi le premier agent logiciel 6a offre à l'application de transmission déportée 8 une interface de programmation 7 (API) permettant d'échanger des commandes et évènements destinés au moyen de transmission sans fil 4. Le second agent logiciel 6b, intégré au poste fixe 3, en liaison avec le premier agent logiciel 6a, interface le moyen de transmission sans fil 4 et retransmet lesdits commandes et évènements. Le second agent logiciel 6b est placé au plus près du moyen de transmission sans fil 4 et en assure le contrôle en lui transmettant commandes et évènements qu'il reçoit de manière distante du premier agent logiciel 6a. De manière symétrique les commandes et évènements émises par le moyen de transmission sans fil 4 sont récupérées par le second agent logiciel 6b qui les retransmet au premier agent logiciel 6a. Le premier agent logiciel 6a est avantageusement déporté à proximité de l'application de transmission déportée 8. Le premier agent logiciel 6a présente à l'application 8 une interface de programmation 7 (API) agissant comme une télécommande à distance du moyen de transmission sans fil 4. Cette interface de programmation 7 présente dans les deux directions, à chacun des deux composants 4,8 respectifs, les commandes et évènements échangées entre l'application de transmission déportée 8 et le moyen de transmission 4.

Selon un mode de réalisation particulier, l'application déportée 8 peut encore contrôler à distance une interface homme machine 9 du poste fixe 3. Ceci permet d'offrir des services complets à l'utilisateur du poste fixe 3. Ceci est illustré plus loin.

Avantageusement encore le premier agent logiciel 6a et l'application de transmission déportée 8 sont localisés et s'exécutent dans le central 1. Alors qu'une application de transmission locale 10 selon l'art antérieur contrôlait un poste fixe 3 et son moyen de transmission 4 unique, l'application de transmission déportée 8 selon l'invention est a contrario centrale et peut, par l'intermédiaire des agents logiciels 6a, 6b, contrôler une pluralité de postes fixes 3 ainsi que les équipements mobiles associés 5.

Le réseau 2 est avantageusement un réseau local filaire. Un exemple illustratif d'un tel réseau 2 convenant à l'invention est un réseau IP. Un tel réseau utilise avantageusement un protocole HTTP.

Les deux agents logiciels 6a, 6b communiquent avantageusement entre eux au moyen d'un tunnel 11 de communication. Ce tunnel est avantageusement un tunnel sécurisé. Dans le cas d'un protocole HTTP ceci peut être implémenté en utilisant HTTPS.

Selon un mode de réalisation selon l'invention le moyen de transmission sans fil 4 comprend un émetteur/récepteur hertzien.

Selon encore un mode de réalisation selon l'invention le moyen de transmission sans fil 4 met en oeuvre un protocole Bluetooth.

Alternativement, le moyen de transmission sans fil 4 met en oeuvre un protocole WiFi.

Selon un mode de réalisation avantageux, l'interface de programmation 7 propose différentes commandes et évènements codés en langage XML. Ceci permet avantageusement de décrire et d'implémenter l'interface de programmation 7 en utilisant un langage standard reconnu dans le domaine. Il est de plus possible de standardiser les commandes et évènements représentatifs du moyen de transmission sans fil 4 indépendamment du moyen 4 réellement présent. L'interface de programmation 7 réalise alors une traduction bidirectionnelle entre les commandes et évènements du standard et les commandes et évènements spécifiques compréhensibles par le moyen de transmission 4.

Selon un mode de réalisation particulier les commandes et évènements sont codés en langage SOAP.

Selon un mode de réalisation particulier l'interface de programmation 7 met en oeuvre le standard HCI. Ce standard, défini pour la norme BlueTooth permet l'utilisation d'un jeu prédéfini de commandes et d'évènements.

A titre d'exemple les commandes et évènements offerts par l'interface de programmation 7 comprennent :
- lancement unique d'une découverte des équipements mobiles dans la portée,
- lancement périodique d'une découverte des équipements mobiles dans la portée,
- obtention du résultat de la découverte,
- obtention du statut de présence,
- obtention de la table d'appariement,
- début de la procédure d'appariement,
- acceptation de la procédure d'appariement,
- annulation de la procédure d'appariement,
- obtention de la liste des équipements appariés,
- mise à jour de la liste des équipements appariés,
- commande/évènement d'établissement d'une connexion avec un équipement spécifique,
- commande/évènement de libération d'un lien de transmission sans fil,
- autres commandes (par exemple spécifique à un type de transmission utilisé).

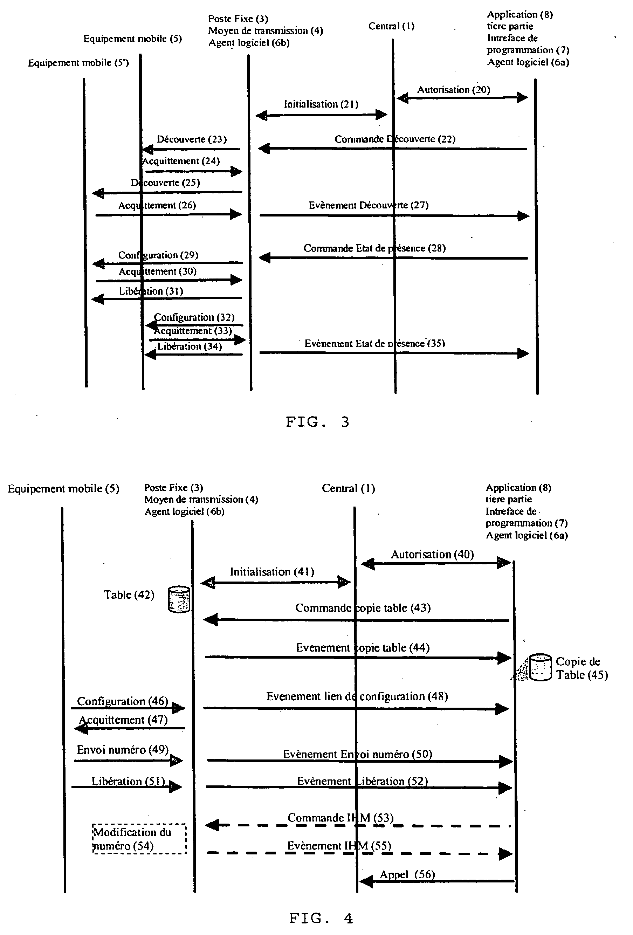

Sur la base des figures 3 et 4 vont maintenant être décrits deux exemples d'application de transmission déportée 8 rendus possibles par l'invention. Les traits verticaux figurent les composants du système. Les flèches horizontales figurent les commandes ou évènements échangés entre lesdits composants. Le temps s'écoule du haut vers le bas de la figure.

La figure 3 illustre une application de DECOUVERTE visant à identifier des équipements mobiles 5, 5' présents à portée d'un poste fixe 3. Une telle application de DECOUVERTE est indicative d'une famille d'application où des services basés sur la localisation (Location Based Services : LBS) sont entièrement contrôlés par une application tierce partie 8. Cette dernière peut être implémentée sur un serveur HTTP. En se référant à la figure 3, les composants sont un central 1, un poste fixe 3 faisant fonction, grâce à son moyen de transmission 4, de point d'accès sans fil au système pour un premier 5 et un second 5' équipements mobiles. L'application de tierce partie 8, se fait reconnaître auprès du central 1 pour obtenir une autorisation 20. Le central 1 peut ensuite effectuer une initialisation 21 du poste fixe 3. L'application 8 émet ensuite, via le premier agent logiciel 6a, qui transmet via le tunnel 11, au second agent logiciel 6b, localisé dans le poste fixe 3, une commande de découverte 22. Le moyen de transmission sans fil 4 du poste fixe 3 reçoit du second agent logiciel 6b, les commandes que l'application 8 a transmises au premier agent logiciel 6a via l'interface de programmation 7. L'application DECOUVERTE utilise avantageusement des requêtes du protocole de transmission sans fil. Dans le cas du protocole BlueTooth, sont utilisés des requêtes BlueTooth (Inquiry) et des services de découverte de profils (SDP) reconnus par les équipements mobiles 5, 5'. Une commande de découverte 23, 25 est émise. Un premier équipement mobile 5 la reçoit et l'acquitte 24. Un second équipement mobile 5' la reçoit et l'acquitte 26. Les acquittements 24, 26 reçus par le poste fixe 3 via le moyen de transmission 4 et le second agent logiciel 6b, indiquent que deux équipements mobiles 5, 5' ont été découverts. Un compte rendu 27, sous forme d'un évènement résultat de découverte est établi par le second agent logiciel 6b et retourné, via le premier agent logiciel 6a, à l'application 8. Dans une deuxième étape illustrative, l'application émet une commande d'état de présence 28. Le second agent logiciel 6b du poste fixe 3 reçoit cette commande et le moyen de transmission 4 émet une commande de configuration 29, à destination du premier équipement mobile 5. Ce dernier 5 acquitte cette commande et retourne son état 30. Cet équipement 5 est ensuite libéré par une commande de libération 31. Les mêmes opérations de configuration 32 et de libération 34 sont réalisées avec le second équipement mobile 5' qui retourne son état 33. Le second agent logiciel 6b assemble ces deux états 30, 33 en un évènement résultat état de présence 35 qui est retourné via le premier agent logiciel 6a et l'interface de programmation 7 à l'application 8. L'application 8 est ainsi informée, par un évènement en réponse à sa commande, du nombre et de l'état des équipements mobiles 5, 5' présents.

La figure 4 illustre une application de NUMEROTATION. Comme dans l'exemple de la figure 3, l'application de tierce partie 8, se fait reconnaître auprès du central 1 pour obtenir une autorisation 40. Le central 1 peut ensuite effectuer une initialisation 41 du poste fixe 3. Le poste fixe 3 dispose d'une table d'appariement 42 comportant les associations de numéros. Une commande de copie 43, permet à l'application 8 de disposer, par un évènement 44 d'une copie 45 de ladite table d'appariement. L'opération de numérotation est initiée depuis un équipement mobile 5 qui transmet alors au poste fixe, via la transmission sans fil, un profil de configuration 46. Ce profil peut être au format OBEX. Le poste fixe 3, via le moyen de transmission 4 renvoi à l'équipement mobile 5 un acquittement 47. Parallèlement, via le second agent logiciel 6b auquel il est interfacé, le moyen de transmission 4 émet un évènement 48 indiquant un lien de configuration. Cet évènement 48 est transmis à l'application 8 via le premier agent logiciel 6a et son API 7. De manière analogue, l'équipement mobile 5 envoi 49 un numéro d'appel qui est transmis à l'application 8 par un évènement 50 correspondant. Un ordre de libération 51 permet la validation dudit numéro d'appel et est relayé par un évènement correspondant 52. L'application déportée 8 dispose alors des éléments nécessaires et peut déclencher une commande d'appel 56 du numéro par le central 1. L'application 8 peut aussi, optionnellement proposer une modification du numéro d'appel. Ici l'application 8 utilise des moyens de contrôle à distance de l'interface homme machine 9. Une commande interface homme machine (IHM) 53 autorise la modification et transmet tous les paramètres nécessaires. La modification 54 est réalisée. Elle est conclue par l'envoi en retour à l'application 8 d'un évènement IHM 55. A réception, l'application procède comme précédemment à l'appel 56, sur la base du numéro d'appel modifié.

## Revendications

1. Système de communication comprenant un central (1) connecté par un réseau (2) à au moins un poste fixe (3), ledit poste fixe (3) comprenant un moyen de transmission sans fil (4) permettant de communiquer avec au moins un équipement mobile (5), ***caractérisé en ce que le central (1)*** comprend un premier agent logiciel (6a) offrant une interface de programmation (7) à au moins une application de transmission déportée (8), et **en ce que** un second agent logiciel est (6b) localisé dans le poste fixe (3) et est interfacé avec ledit moyen de transmission sans fil (4), et **en ce que** les deux agents logiciels (6a, 6b) communiquent entre eux au moyen dudit réseau (2) de telle manière à permettre à l'application de transmission déportée (8) de contrôler à distance le moyen de transmission sans fil (4).

2. Système de communication selon la revendication 1, où l'application de transmission déportée (8) peut contrôler à distance une interface homme machine (9) du poste fixe (3).

3. Système de communication selon la revendication 1 ou 2, où le premier agent logiciel (6a) et l'application de transmission déportée (8) sont localisés et s'exécutent sur le central (1).

4. Système de communication selon l'une quelconque des revendications 1 à 3, où le réseau 2 est un réseau local filaire.

5. Système de communication selon la revendication 4, où le réseau 2 utilise un protocole HTTP.

6. Système de communication selon l'une quelconque des revendications 1 à 5, où les deux agents logiciels (6a, 6b) communiquent entre eux au moyen d'un tunnel (11) de communication sécurisé.

7. Système de communication selon l'une quelconque des revendications 1 à 6, où le moyen de transmission sans fil (4) comprend un émetteur/récepteur hertzien.

8. Système de communication selon la revendication 7, où le moyen de transmission sans fil (4) met en oeuvre un protocole Bluetooth.

9. Système de communication selon la revendication 7, où le moyen de transmission sans fil (4) met en oeuvre un protocole WiFi.

10. Système de communication selon l'une quelconque des revendications 1 à 9, où l'interface de programmation (7) propose différentes commandes et évènements codés en langage XML.

11. Système de communication selon la revendication 10, où lesdits commandes et évènements sont codés en langage SOAP.

12. Système de communication selon l'une quelconque des revendications 1 à 11, où l'interface de programmation (7) met en oeuvre le standard HCI.

13. Poste fixe (3) comprenant un moyen de transmission sans fil (4) permettant de communiquer avec au moins un équipement mobile (5), ***caractérisé en ce* que** ledit poste fixe (3) comprend en outre un agent logiciel (6b) interfacé avec ledit moyen de transmission sans fil (4), et apte à communiquer avec un autre agent logiciel 60c distant, via un réseau (2), de telle manière à permettre à une application de transmission déportée (8) de contrôler à distance le moyen de transmission sans fil (4), pour ledit agent logiciel distant (6a).

## Claims

1. A communication system comprising a central unit (1) connected via a network (2) to at least one fixed station (3), said fixed station (3) comprising a wireless transmission means (4) making it possible to communicate with at least one mobile device (5), **characterized in that** the central unit (1) comprises a first software agent (6a) offering a programming interface (7) to at least one remote transmission application (8), and **in that** a second software agent (6b) is located within the fixed station (3) and is interfaced with said wireless transmission means (4), and **in that** both software agents (6a, 6b) communicate with one another by means of said network (2) in such a way as to enable the remote transmission application (8) to remotely control the wireless transmission means (4).

2. A communication system according to claim 1, wherein the remote transmission application (8) may remotely control a human-machine interface (9) of the fixed station (3).

3. A communication system according to claim 1 or 2, wherein the first software agent (6a) and the remote transmission application (8) are located at, and run on, the central unit (1).

4. A communication system according to any one of claims 1 to 3, wherein the network (2) is a wireline local area network.

5. A communication system according to claim 4, wherein the network (2) uses an HTTP protocol.

6. A communication system according to any one of claims 1 to 5, wherein both software agents (6a, 6b) communicate with one another by means of a secure communication tunnel (11).

7. A communication system according to any one of claims 1 to 6, wherein the wireless transmission means (4) comprises a radio emitter/receiver.

8. A communication system according to claim 7, wherein the wireless transmission means (4) implements a Bluetooth protocol.

9. A communication system according to claim 7, wherein the wireless transmission means (4) implements a WiFi protocol.

10. A communication system according to one of claims 1 to 9, wherein the programming interface (7) offers various commands and events encoded in XML language.

11. A communication system according to claim 10, wherein said commands and events are SOAP-encoded.

12. A communication system according to any one of claims 1 to 11, wherein the programming interface (7) implements the HCl standard.

13. A fixed station (3) comprising a wireless transmission means (4) making it possible to communicate with at least one mobile device (5), **characterized in that** said fixed station (3) further comprises a software agent (6b) interfaced with said wireless transmission means (4) and capable of communicating with another remote software agent (6a), via a network (2), in such a way as to enable a remote transmission application (8) to remotely control the wireless transmission means (4), for said remote software agent (6a).

## Patentansprüche

1. Kommunikationssystem mit einer Zentrale (1), welche über ein Netzwerk (2) an mindestens ein stationäres Gerät (3) angeschlossen ist, wobei das besagte stationäre Gerät (3) ein Mittel zur drahtlosen Übertragung (4) umfasst, welches die Kommunikation mit mindestens einer Mobilausrüstung (5) ermöglicht, ***dadurch gekennzeichnet, dass die Zentrale (1)*** einen ersten Software-Agenten (6a) umfasst, welcher eine Programmierschnittstelle (7) für mindestens eine Anwendung einer versetzten Übertragung (8) bereitstellt, und dass ein zweiter Software-Agent (6b) in dem stationären Gerät (3) angeordnet und mit dem besagten Mittel zur drahtlosen Übertragung (4) gekoppelt ist, und dadurch, dass die beiden Software-Agenten (6a, 6b) über das besagte Netzwerk (2) miteinander kommunizieren, um die Anwendung einer versetzten Übertragung (8) zu befähigen, das Mittel zur drahtlosen Übertragung (4) fernzusteuern.

2. Kommunikationssystem nach Anspruch 1, wobei die Anwendung einer versetzten Übertragung (8) fähig ist, eine Mensch-Maschine- Schnittstelle (9) des stationären Gerätes (3) fernzusteuern.

3. Kommunikationssystem nach Anspruch 1 oder 2, wobei der erste Software-Agent (6a) und die Anwendung einer versetzten Übertragung auf der Zentrale (1) angeordnet sind und dort ausgeführt werden.

4. Kommunikationssystem nach einem beliebigen der Ansprüche 1 bis 3, wobei das Netzwerk 2 ein drahtgebundenes lokales Netzwerk ist.

5. Kommunikationssystem nach Anspruch 4, wobei das Netzwerk 2 ein HTTP-Protokoll verwendet.

6. Kommunikationssystem nach einem beliebigen der Ansprüche 1 bis 5, wobei die beiden Software-Agenten (6a, 6b) über einen Tunnel (11) für eine gesicherte Kommunikation miteinander kommunizieren.

7. Kommunikationssystem nach einem beliebigen der Ansprüche 1 bis 6, wobei das Mittel zur drahtlosen Übertragung (4) einen Hertzschen Sender/Empfänger umfasst.

8. Kommunikationssystem nach Anspruch 7, wobei das Mittel zur drahtlosen Übertragung (4) ein Bluetooth-Protokoll verwendet.

9. Kommunikationssystem nach Anspruch 7, wobei das Mittel zur drahtlosen Übertragung (4) ein WiFi-Protokoll verwendet.

10. Kommunikationssystem nach einem beliebigen der Ansprüche 1 bis 9, wobei die Programmierschnittstelle (7) verschiedene in XML-Sprache codierte Befehle und Ereignisse anbietet.

11. Kommunikationssystem nach Anspruch 10, wobei die besagten Befehle und Ereignisse in SOAP-Sprache codiert sind.

12. Kommunikationssystem nach einem beliebigen der Ansprüche 1 bis 11, wobei die Programmierschnittstelle (7) den HCl-Standard verwendet.

13. Stationäres Gerät (3) mit einem Mittel zur drahtlosen Übertragung (4), welches die Kommunikation mit mindestens einer Mobilausrüstung (5) ermöglicht, ***dadurch gekennzeichnet, dass*** das besagte stationäre Gerät (3) weiterhin einen mit dem besagten Mittel zur drahtlosen Übertragung (4) gekoppelten Software-Agenten (6b) umfasst und fähig ist, über ein Netzwerk (2) mit einem anderen entfernten Software-Agenten (6a) zu kommunizieren, um eine Anwendung einer versetzten Übertragung (8) zu befähigen, das Mittel zur drahtlosen Übertragung (4) über den besagten entfernten Software-Agenten (6a) fernzusteuern.
